Europäisches Patentamt

European Patent Office

Office européen des brevets

(19)

(11) Veröffentlichungsnummer: **0 024 527**

**A2**

# (12) EUROPÄISCHE PATENTANMELDUNG

(21) Anmeldenummer: 80104145.0

(22) Anmeldetag: 16.07.80

(51) Int. Cl.³: **G 01 F 23/28**
**G 01 S 17/08**

(30) Priorität: 01.08.79 DE 2931199

(43) Veröffentlichungstag der Anmeldung:
**11.03.81 Patentblatt 81/10**

(84) Benannte Vertragsstaaten:
**CH FR GB IT LI NL SE**

(71) Anmelder: **Endress u. Hauser GmbH u.Co.**
**Hauptstrasse 1**
**D-7867 Maulburg(DE)**

(72) Erfinder: **Kompa, Günter, Dr.**
**Gartenstrasse 20**
**D-7860 Schopfheim(DE)**

(74) Vertreter: **Leiser, Gottfried, Dipl.-Ing.**
**Patentanwälte Prinz-Hauser-Leiser Ernsberger Strasse**
**19**
**D-8000 München 60(DE)**

(54) **Anordnung zur Messung des Badspiegels in einer Giessanlage, insbesondere in der Kokille einer Stranggiessanlage.**

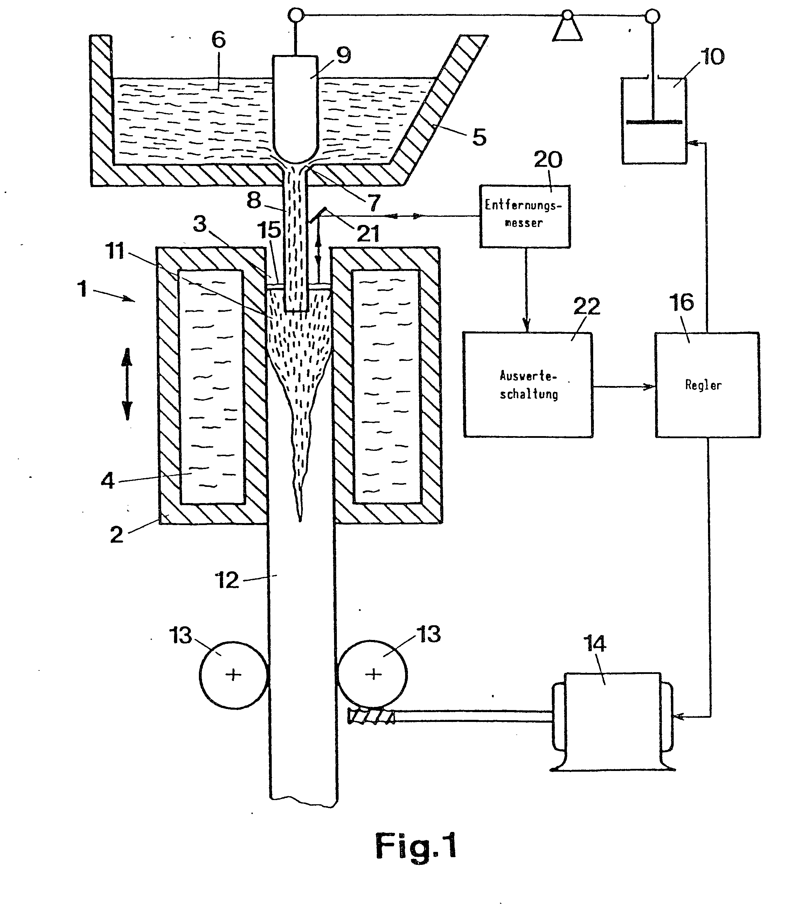

(57) Die Messung des Badspiegels in der Kokille (1) einer Stranggießanlage erfolgt mit Hilfe eines elektro-optischen Entfernungsmessers (20), der Lichtimpulse aussendet, die die am Badspiegel reflektierten Lichtimpulse empfängt und die Laufzeit der Lichtimpulse mißt. Geeignete optische Einrichtungen (21) richten die Sende-Lichtimpulse vertikal von oben auf den Badspiegel und leiten die vertikal nach oben reflektierten Echo-Lichtimpulse dem elektro-optischen Entfernungsmesser (20) zu, so daß die Messung auch in sehr engen Kokillen (1) möglich ist (Figure 1).

EP 0 024 527 A2

./...

Fig.1

Patentanwälte

Dipl.-Ing.     Dipl.-Chem.     Dipl.-Ing.

**E. Prinz**    –    **Dr. G. Hauser**    –    **G. Leiser**

Ernsbergerstrasse 19

8 München 60

0024527

Endress u. Hauser GmbH u. Co.        16. Juli 1980

Hauptstraße 1

7867 M a u l b u r g

Unser Zeichen: E 962c

---

### Anordnung zur Messung des Badspiegels in einer Gießanlage, insbesondere in der Kokille einer Stranggießanlage

---

Die Erfindung bezieht sich auf eine Anordnung zur Messung des Badspiegels in einer Gießanlage, insbesondere in der Kokille einer Stranggießanlage.

Das Stranggießen von Stahl hat in den letzten Jahren an Bedeutung gewonnen. Gegenüber dem herkömmlichen Standguß bietet es wesentliche Vorteile, wie höheres Ausbringen, niedrigere Umwandlungskosten, weniger Arbeitsgänge, Arbeitsentlastung und gleichmäßige Qualität.

Eine der wichtigsten Voraussetzungen für einen betriebssicheren und produktiven Betrieb der Stranggießanlage ist die Messung und Regelung des Niveaus in der Kokille. Liegt der Badspiegel zu hoch, so besteht die Gefahr, daß die Kokille überläuft. Bei einem zu niedrigen Badspiegel besteht die Gefahr, daß der Strang abreißt, da die Kühlwirkung nicht aus-

0024527

reicht und der erstarrte Mantel des Stranges zu dünn ist. Sowohl der Überlauf wie auch ein Abriß bedeuten eine Betriebsstörung, die mit hohen Kosten verbunden ist.

Während des stationären Betriebszustandes soll der Badspiegel auf konstantem Niveau gehalten werden, um ein homogenes Gefüge im erstarrten Strang zu erhalten und damit hohe Stahlqualität zu garantieren.

Die Regelung des Badspiegels setzt eine laufende Messung des Badspiegels im Betrieb der Anlage voraus. Diese Messung muß unter schwierigen Bedingungen durchgeführt werden. Einerseits ist die Meßeinrichtung sehr hohen Temperaturen und der Gefahr von Verschmutzungen ausgesetzt. Andrerseits ist der für die Messung verfügbare Raum sehr beschränkt, weil die Formdurchlässe der Kokillen oft einen kleinen Querschnitt haben, der zudem noch zum großen Teil von einem Tauchrohr eingenommen wird, die Messung jedoch über einen ausreichenden Höhenbereich in der Kokille erfolgen muß.

Wie aus dem Aufsatz "Instrumentierung und Automatisierung von Stranggießanlagen" von Hubert Hinkelmann in der "Siemens-Zeitschrift" 47 (1973), Heft 2, Seiten 106 bis 108, bekannt ist, werden heutzutage hauptsächlich radioaktive Meßverfahren zur Badspiegelmessung eingesetzt. Zu diesem Zweck wird auf der Höhe des Badspiegels an einer Seite der Kokille ein nuklearer Stabstrahler und auf der entgegengesetzten Seite ein Szintillationszähler angeordnet. Der Stabstrahler besteht aus einem Material, wie Co 60 oder Cs 137, das Gamma-Quanten aussendet. Die Länge des Strahlers ist dem Meßbereich angepaßt und liegt in der Größenordnung von 100 mm. Die pro Zeiteinheit auf den Szintillationszähler auftretenden Strahlenquanten sind eine Funktion des Füllstandes.

Nachteilig bei den radiometrischen Meßverfahren ist, daß
die statistischen Schwankungen der pro Zeiteinheit eintreffenden Quanten mit der Füllhöhe zunehmen, so daß eine
Mittelwertbildung der detektierten Impulsrate unerläßlich
wird. Dies bedingt jedoch Meßzeiten, die, setzt man Streuungen bis zu 5 % des Meßbereichs voraus, in der Größenordnung einer Sekunde liegen. Aus regelungstechnischen Gründen
sind derartig lange Zeitkonstanten des Systems recht bedenklich, insbesondere dann, wenn bei Strängen mit kleinen Querschnitten und entsprechend großen Abziehgeschwindigkeiten
die Zeitkonstanten des Systems auf Niveauänderungen sehr
klein gehalten werden müssen, um einen sicheren Betriebsablauf zu gewährleisten.

Weiterhin ist es nachteilig, daß bei der radiometrischen
Messung der Regelbereich auf die Stablänge beschränkt ist,
so daß bei den üblichen Strahlern die Niveauregelung im
stationären Betriebszustand ermöglicht wird, jedoch der
kritische Moment des Angießens meßtechnisch nicht abgedeckt
werden kann, so daß eine anfängliche Regelung per Hand notwendig bleibt. Zwar sind Lösungsvorschläge zur Erfassung
des Angießvorgangs bekannt, bei denen mehrere nukleare Stabstrahler übereinander in der Kokillenwand angeordnet werden;
dadurch wird jedoch der technische Aufwand beträchtlich erhöht.

Der wesentliche Nachteil der bekannten Anordnung liegt aber
in der Verwendung von radioaktiven Isotopen, wie z.B. Co 60
oder Cs 137, die wegen der auftretenden Gammastrahlung besonderen Schutzmaßnahmen unterworfen sind. Nach jedem Stranggießvorgang werden die Kokillen von innen geputzt, um ein
Anbacken von Gießpulver an der Kokilleninnenwand zu verhindern. Dabei ist nicht auszuschließen, daß das Abschalten des
Strahlers versäumt wird, wodurch eine erhöhte Strahlenbelastung des Personals eintreten kann. Auch ist das psychische Moment auf das Personal nicht zu unterschätzen, das aus der Radioaktivität der Strahlungsquelle resultiert.

Aufgabe der Erfindung ist die Schaffung einer Anordnung, mit welcher der Badspiegel in einer Gießanlage, insbesondere in der Kokille einer Stranggießanlage schnell und genau über einen beliebig großen Meßbereich auf völlig ungefährliche Weise gemessen werden kann.

Diese Aufgabe wird durch die im Anspruch 1 angegebenen Merkmale gelöst.

Bei der Meßanordnung erfolgt die Messung des Badspiegels mit Licht, also berührungsfrei mit einer völlig harmlosen Strahlung. Das eigentliche Entfernungsmeßgerät kann dabei in beliebigem Abstand von der Kokille angeordnet sein, so daß es vor der Hitze des Gießvorgangs und anderen schädlichen Einflüssen geschützt ist. Da die Messung mit einem vertikal in die Kokille eintretenden Lichtstrahl erfolgt, ist die Messung auch bei sehr engen Kokillen über eine beliebige Höhe möglich, so daß auch der Angießvorgang voll erfaßt werden kann. Die Messung kann sehr genau und mit großem Auflösungsvermögen durchgeführt werden, und das Meßergebnis wird verzögerungsfrei erhalten.

Weitere Merkmale und Vorteile der Erfindung ergeben sich aus der folgenden Beschreibung von Ausführungsbeispielen anhand der Zeichnung. In der Zeichnung zeigt:

Fig. 1   eine schematische Darstellung einer Stranggießanlage
mit einer Meßanordnung nach der Erfindung,

Fig. 2   eine vergrößerte Darstellung der Meßanordnung von
Fig. 1 und

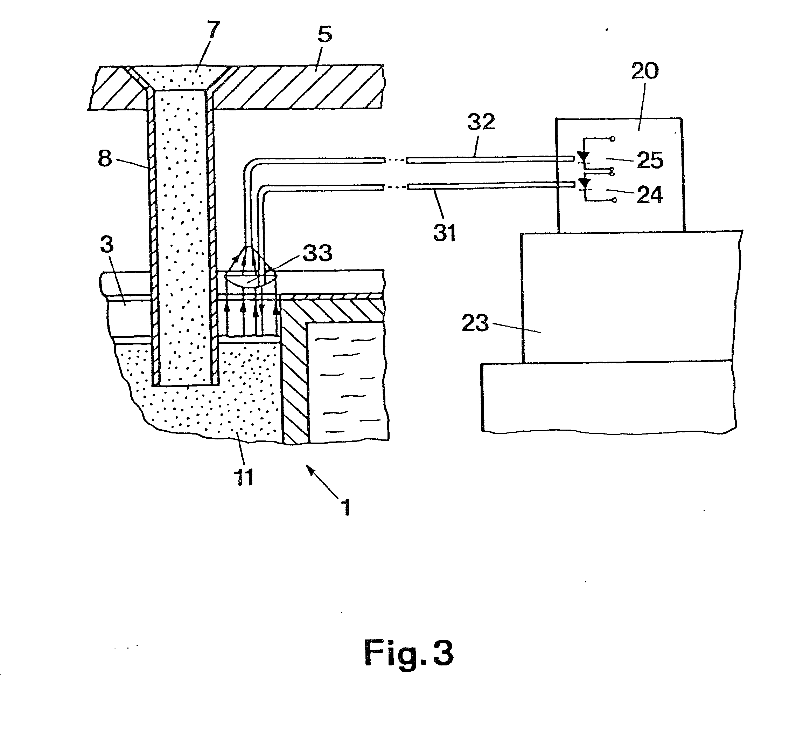

Fig. 3   eine andere Ausführungsform der Meßanordnung nach
der Erfindung.

Fig. 1 zeigt schematisch eine Stranggießanlage mit einer
Kokille 1 und Einrichtungen zur Messung und Regelung des
Badspiegels in der Kokille. Die Kokille 1 besteht aus
einem doppelwandigen zylindrischen Gehäuse 2, dessen oben
und unten offener zentraler Durchlaß 3 die Gießform bildet. Durch den ringförmigen Hohlraum 4 des Gehäuses fließt
Kühlwasser. Oberhalb der Kokille 1 ist ein Zwischenbehälter 5 angeordnet, der einen Vorrat 6 der Schmelze des zu
gießenden Metalls enthält. Am Boden des Zwischenbehälters 5
ist eine Ausflußdüse 7 angebracht, an die sich ein Tauchrohr 8 anschließt, das nach unten in den Formdurchlaß 3 der
Kokille 1 ragt. Die Schmelze kann aus dem Zwischenbehälter 5
durch die Ausflußdüse 7 und das Tauchrohr 8 in die Kokille 1
fließen. Die Durchflußmenge der Schmelze wird mit Hilfe
eines im Zwischenbehälter 5 angeordneten Stopfens 9 verändert, der mit der Ausflußdüse 7 zusammenwirkt und mittels
eines Stellglieds 10 einstellbar ist.

Die durch die Ausflußdüse 7 und das Tauchrohr 8 fließende
Schmelze füllt den Formdurchlaß 3 der Kokille 1 bis zu
einer gewissen Höhe an, wodurch das Gießbad 11 gebildet
wird. Die Schmelze erstarrt an den gekühlten Kokillenwänden verhältnismäßig rasch von innen nach außen, so
daß sich eine relativ feste äußere Schale bildet, während das Innere des Stranges noch flüssig bleibt. Damit
kontinuierlich ein fortlaufender Strang gegossen wird, wird
der am unteren Ende der Kokille austretende Strang 12 mit Hilfe von Abzugswalzen 13 abgezogen, die von einem Antriebsmotor 14 angetrieben werden. Damit der Strang nicht in der
Kokille kleben bleibt, wird der Kokille eine abwechselnde
Auf- und Abwärtsbewegung erteilt, wie durch einen Doppelpfeil angedeutet ist. Ein auf die Oberfläche des Gießbads 11
in der Kokille geworfenes Gießpulver 15 verhindert die
Wärmeabstrahlung; außerdem dient es im flüssigen Zustand
als Gleitmittel zwischen der Innenwand der Kokille und dem
erstarrten Strang.

Eine der wichtigsten Voraussetzungen für einen betriebssicheren und produktiven Betrieb der Stranggießanlage ist
die Messung und Regelung des Badspiegels, d.h. des Niveaus
der Oberfläche des Gießbads 11 in der Kokille. Liegt der
Badspiegel zu hoch, so besteht die Gefahr, daß die Kokille
überläuft. Bei einem zu niedrigen Badspiegel besteht die
Gefahr, daß der Strang abreißt, da der Strang bis zum Verlassen der Kokille nicht ausreichend gekühlt und der erstarrte Mantel des Stranges zu dünn ist. Sowohl das Überlaufen als auch ein Abriß bedeuten eine Betriebsstörung, die
mit hohen Kosten verbunden ist. Ferner muß während des stationären Betriebszustandes der Badspiegel in der Kokille möglichst genau auf konstantem Niveau gehalten werden, damit
ein homogenes Gefüge in dem erstarrten Strang erhalten wird
und somit eine hohe Qualität des Stranges gewährleistet ist.

Für die Regelung des Kokillen-Füllstands gibt es zwei Stellgrößen: die Abzugsgeschwindigkeit und den Zufluß der Schmelze zur Kokille. Die Regelung der Abzugsgeschwindigkeit erfolgt durch Einwirkung auf die Drehzahl des Antriebsmotors 14,
und die Regelung des Zuflusses der Schmelze erfolgt durch die
Einstellung des Stopfens 9 mittels des Stellglieds 10. Die
Stellgrößen werden von einem Regler 16 geliefert, der als
Regelgröße ein Signal empfängt, das die Höhe des Badspiegels
in der Kokille anzeigt. Zur Erzeugung dieses Signals ist daher eine Messung des Badspiegels in der Kokille erforderlich.

Die Messung des Badspiegels erfolgt mit Hilfe eines elektro-optischen Entfernungsmessers 20, der nach dem Impulslaufzeitverfahren mit Lichtimpulsen arbeitet. Ein solcher elektro-optischer Entfernungsmesser sendet in rascher Folge Sende-Lichtimpulse aus, und er empfängt die an einem Ziel reflektierten Echo-Lichtimpulse. Eine elektronische Auswerteschaltung mißt den Zeitabstand zwischen jedem Sende-Lichtimpuls und dem entsprechenden Echo-Lichtimpuls, der ein Maß für die Entfernung zwischen dem Entfernungsmesser und dem Ziel ist. Im vorliegenden Fall werden die vom elektro-optischen Entfernungsmesser 20 ausgesendeten Sende-Lichtimpulse mit Hilfe einer optischen Umlenkeinrichtung 21 vertikal von oben auf die Oberfläche des Gießbads 11 in der Kokille 1 gerichtet, und die von dieser Oberfläche zurückgeworfenen Echoimpulse werden durch die optische Umlenkeinrichtung 21 zum Entfernungsmesser 20 zurückgeworfen. Die mit dem elektro-optischen Entfernungsmesser 20 verbundene Auswerteschaltung 22 mißt den Zeitabstand zwischen der Aussendung jedes Sende-Lichtimpulses und dem Empfang des entsprechenden Echo-Lichtimpulses; dieser Zeitabstand ist dem von den Lichtimpulsen zwischen dem Entfernungsmesser und dem Badspiegel in beiden Richtungen zurückgelegten Weg proportional. Aufgrund dieser Zeitmessung liefert die Auswerteschaltung 22 zum Regler 16 ein Signal, das ein Maß für die Höhe des Badspiegels in der Kokille 1 ist.

Da der von den Lichtimpulsen zwischen dem Entfernungsmesser und dem Badspiegel zurückgelegte Weg verhältnismäßig kurz ist, muß ein elektro-optischer Entfernungsmesser 20 verwendet werden, der für die Messung kurzer Entfernungen geeignet ist. Um ferner die Höhe des Badspiegels mit ausreichender Genauigkeit messen und regeln zu können, muß der elektro-optische Entfernungsmesser 20 so ausgeführt sein, daß er eine große Auflösung hat, d.h. noch sehr kleine Entfernungsdifferenzen unterscheiden kann. Diese Bedingungen werden beispielsweise besonders gut von einem elektro-optischen Entfernungsmesser erfüllt, der Gegenstand der älteren, nicht vorveröffentlichten Patentanmeldung P 29 08 854.8 ist.

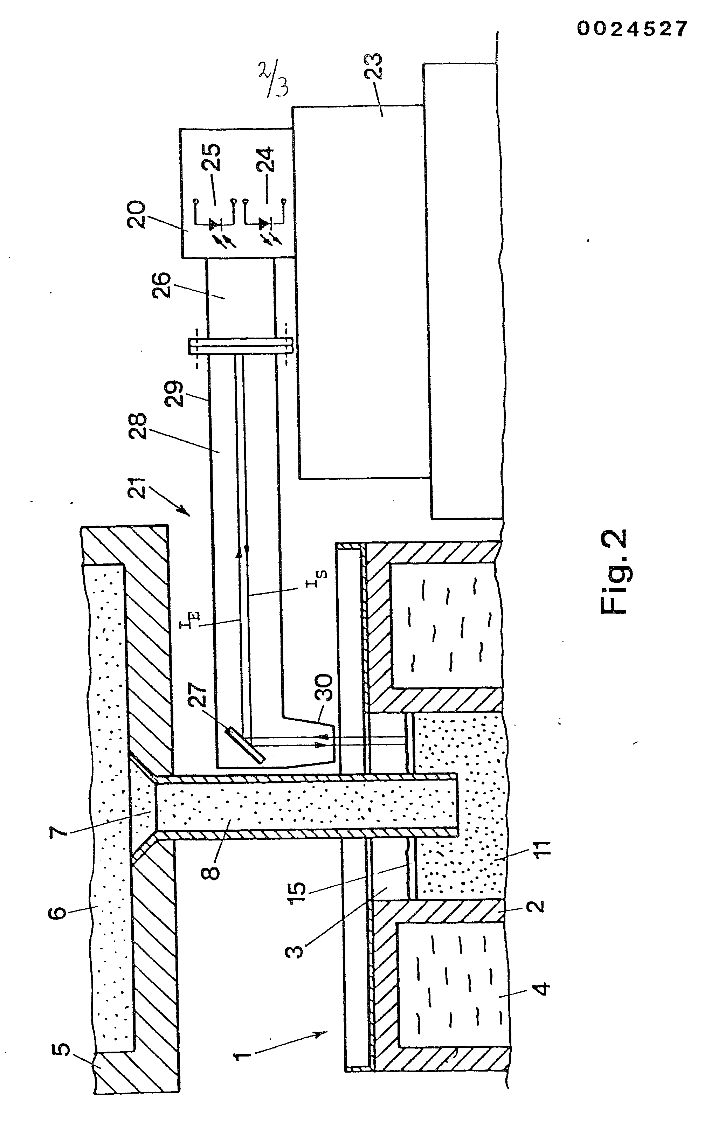

Fig. 2 zeigt eine Ausführungsform der Anordnung zur Messung des Badspiegels in näheren Einzelheiten. Der elektro-optische Entfernungsmesser 20 ist auf einem Sockel 23 seitlich neben der Kokille 1, jedoch oberhalb der Höhe des oberen Randes der Kokille montiert. Er enthält einen Lichtimpulserzeuger 24, beispielsweise eine Laser-Diode, und einen photoelektrischen Wandler 25, beispielsweise eine Photodiode, welche auftreffende Lichtimpulse in elektrische Signale umwandelt. Ferner enthält der Entfernungsmesser 20 natürlich noch die für die Ansteuerung des Lichtimpulserzeugers 24 erforderlichen elektrischen Steuer- und Treiberschaltungen, die zur Vereinfachung nicht dargestellt sind. Eine Optik 26 bewirkt die Aussendung der Sende-Lichtimpulse in Form eines parallelen Lichtbündels geringen Durchmessers in horizontaler Richtung zur Kokille 1 hin, wie durch den Strahlengang $I_S$ angedeutet ist. Die optische Umlenkeinrichtung 21 ist in diesem Fall durch einen Umlenkspiegel 27 gebildet, der mit einer Neigung von 45° zur Strahlrichtung oberhalb des Formdurchlasses 3 der Kokille 1 angeordnet ist, so daß er die Sendeimpulse vertikal nach unten umlenkt und auf die Oberfläche des Gießbads 11 in der Kokille 1 auftreffen läßt. Ein Teil des am Badspiegel nach oben reflektierten Lichtes jedes Sende-Lichtimpulses wird vom Umlenkspiegel 27 aufgefangen, in die horizontale Richtung umgelenkt und als Echo-Lichtimpuls zum elektro-optischen Entfernungsmesser 20 zurückgeworfen, wie durch den Strahlengang $I_E$ angedeutet ist. Die Optik 26 sammelt die in einem Bündel mit verhältnismäßig großem Querschnitt gestreuten Echo-Lichtimpulse und sorgt dafür, daß sie auf den photoelektrischen Wandler 25 fokussiert werden.

Der Umlenkspiegel 27 besteht vorzugsweise aus einer ebenen rechteckförmigen oder kreisförmigen Stahlplatte, die hochpoliert ist. Es können jedoch auch andere Materialien zum Einsatz kommen, die gut reflektieren und temperaturbeständig sind. Vorzugsweise ist der Umlenkspiegel 27 planar; es können jedoch auch für den Sende-Strahlengang und für den Echo-Strahlengang getrennte Spiegel mit unterschiedlichen Krümmungen verwendet werden, z.B. ein kleiner ebener Spiegel für den Sendestrahl und ein gekrümmter Spiegel für den Echostrahl, der die am Badspiegel reflektierten divergenten Teilstrahlen in ein paralleles Bündel umlenkt.

Um die Gefahr einer Verschmutzung des Umlenkspiegels 27 zu verringern, wird der Umlenkspiegel vorzugsweise am Knie eines abgewinkelten Rohres 28 angeordnet, dessen langer, zum Entfernungsmesser 20 gerichteter Schenkel 29 auch die Optik des Entfernungsmessers 20 umschließt, während der kurze Schenkel 30 zur Badoberfläche gerichtet und unten offen ist. Dieser kurze Schenkel 30 verjüngt sich konisch nach unten.

Fig. 3 zeigt schematisch eine andere Ausführungsform der Meßanordnung, bei welcher die optische Umlenkeinrichtung durch zwei Lichtleiter 31, 32 gebildet ist, die im Winkel von 90° abgebogen sind. Ein solcher Lichtleiter besteht in bekannter Weise aus einer Glasfaser oder aus einem Glasfaserbündel. Das eine Ende des Lichtleiters 31 ist mit dem Lichtimpulserzeuger 24 gekoppelt; das andere Ende dieses Lichtleiters liegt vertikal über dem Badspiegel, so daß die daraus austretenden Sende-Lichtimpulse nach unten auf den Badspiegel auftreffen. Das nach unten gerichtete Ende des Lichtleiters 32 empfängt einen Teil des am Badspiegel reflektierten Lichtes und überträgt es als Echo-Lichtimpulse zu dem mit dem anderen Ende gekoppelten photoelektrischen Wandler 25. Um einen möglichst großen Anteil des am Badspiegel reflektierten Lichtes nutzbar zu machen, ist vorzugsweise oberhalb des Badspiegels eine Sammeloptik 33 angeordnet, die das aufgefangene Licht auf den Eintritt des Lichtleiters 32 fokussiert. Der Sende-Lichtleiter 31 kann in diesem Fall durch eine Öffnung in der Sammeloptik 33 hindurchgeführt sein.

P a t e n t a n s p r ü c h e

1. Anordnung zur Messung des Badspiegels in einer Gießanlage,
   insbesondere in der Kokille einer Stranggießanlage, gekennzeichnet durch einen nach dem Impulslaufzeitverfahren mit
   Lichtimpulsen arbeitenden elektro-optischen Entfernungsmesser mit einem Lichtimpulserzeuger zum Aussenden von
   Sende-Lichtimpulsen und mit einem photoelektrischen Empfangswandler, der empfangene Lichtimpulse in elektrische
   Ausgangssignale umwandelt, eine Einrichtung, welche die
   Sende-Lichtimpulse vertikal von oben auf den Badspiegel
   richtet,      eine Einrichtung, welche die am Badspiegel
   reflektierten Echo-Lichtimpulse auf den photoelektrischen
   Empfangswandler richtet, und durch eine mit dem Lichtimpulserzeuger und dem photoelektrischen Empfangswandler verbundene Auswerteschaltung zur Messung des Zeitabstands zwischen
   dem Zeitpunkt der Aussendung jedes Sende-Lichtimpulses und
   dem Zeitpunkt des Empfangs des entsprechenden Echo-Lichtimpulses.

2. Anordnung nach Anspruch 1, dadurch gekennzeichnet, daß
   der elektro-optische Entfernungsmesser derart seitlich
   angeordnet ist, daß die Sende- und Empfangsrichtungen der
   Lichtimpulse etwa horizontal oberhalb des höchsten vorkommenden Badspiegels liegen, und daß im Strahlengang der
   Sende-Lichtimpulse und der Echo-Lichtimpulse jeweils eine
   optische Umlenkeinrichtung liegt.

3. Anordnung nach Anspruch 2, dadurch gekennzeichnet, daß jede optische Umlenkeinrichtung ein oberhalb des Badspiegels angeordneter Umlenkspiegel ist.

4. Anordnung nach Anspruch 3, dadurch gekennzeichnet, daß ein gemeinsamer Umlenkspiegel für die Sende-Lichtimpulse und für die Echo-Lichtimpulse verwendet wird.

5. Anordnung nach Anspruch 3 oder 4, dadurch gekennzeichnet, daß der Umlenkspiegel im Knie eines abgewinkelten Rohres angeordnet ist, dessen eines Ende mit dem elektro-optischen Entfernungsmesser verbunden ist und dessen anderes Ende auf den Badspiegel gerichtet ist.

6. Anordnung nach Anspruch 5, dadurch gekennzeichnet, daß sich das auf den Badspiegel gerichtete Ende des Rohres konisch verjüngt.

7. Anordnung nach Anspruch 2, dadurch gekennzeichnet, daß jede optische Umlenkeinrichtung durch einen Lichtleiter aus einer Glasfaser oder einem Glasfaserbündel gebildet ist.

8. Anordnung nach Anspruch 7, dadurch gekennzeichnet, daß zwischen das auf den Badspiegel gerichtete Ende des für die Übertragung der Echo-Impulse vorgesehenen Lichtleiters und den Badspiegel eine fokussierende Optik eingefügt ist.

**Fig.1**

**Fig. 2**

**Fig. 3**

0024527